# EUROPEAN PATENT SPECIFICATION

(11) **EP 2 510 812 B1**
(45) Date of publication and mention of the grant of the patent: **27.12.2017**
(21) Application number: 10844078.5
(22) Date of filing: 25.11.2010
(51) Int. Cl.: A23L 21/20, A23L 33/10, A23L 33/105

(54) **BIOLOGICALLY ACTIVE FOOD ADDITIVE**
BIOLOGISCH AKTIVE NAHRUNGSERGÄNZUNG
ADDITIF BIOACTIF AUX ALIMENTS

(30) Priority: 09.12.2009 RU 2009145760
(43) Date of publication of application: 17.10.2012
(73) Proprietor: Obshestvo S Ogranichennoj Otvetstvennostju "PARAFARM", Penza 440023 (RU)
(72) Inventor: ELISTRATOV, Dmitriy Gennadjevich, Penza 440060 (RU)
(74) Representative: Engel, Christoph Klaus
(86) International application number: PCT/RU2010/000702
(87) International publication number: WO 2011/090400

(56) References cited:
- DE-A1- 19 627 627
- FR-A1- 2 793 657
- KZ-A- 14 879
- RU-C1- 2 233 666
- RU-C2- 2 203 050
- RU-C2- 2 328 879
- DATABASE WPI Week 200459 Thomson Scientific, London, GB; AN 2004-612541 XP002727597, & RU 2 233 666 C1 (PYATIGORSK PHARM ACAD) 10 August 2004 (2004-08-10)
- DATABASE CAPLUS [Online] CHEMICAL ABSTRACTS SERVICE, COLUMBUS, OHIO, US; 19 July 2007 (2007-07-19), XP002727598, Database accession no. 2007:780729 & JP 2007 181447 A (ITO YOSHITAKA; KUYAMA YOKO; MARUYAMA MAKOTO) 19 July 2007 (2007-07-19)
- DATABASE WPI Week 200265 Thomson Scientific, London, GB; AN 2002-606486 XP002727599, & RU 2 185 848 C2 (DULKIS M D) 27 July 2002 (2002-07-27)
- 'Federalny reestr biologicheski aktivniykh dobavok k pische' SPB. 2005, page 411, XP008164756
- TUTELYAN V.A. ET AL.: 'Biologichesky aktivnye dobavki v pitanii cheloveka' IZD-VO NAUCHNO-TEKHNICHESKOY LITERATURY 1999, TOMSK, page 41
- KHISMATULLINA N.Z.: 'Aliterapiya.' PERM: MOBILE 2005, pages 77, 95 - 96, 183, 219, XP008169097
- Nina Fabjan ET AL: "Tartary Buckwheat ( Fagopyrum tataricum Gaertn.) as a Source of Dietary Rutin and Quercitrin", Journal of Agricultural and Food Chemistry, vol. 51, no. 22, 1 October 2003 (2003-10-01), pages 6452-6455, XP055362606, US ISSN: 0021-8561, DOI: 10.1021/jf034543e
- KREFT I ET AL: "Rutin content in buckwheat (Fagopyrum esculentum Moench) food materials and products", FOOD CHEMISTRY, ELSEVIER LTD, NL, vol. 98, no. 3, 1 January 2006 (2006-01-01), pages 508-512, XP027989186, ISSN: 0308-8146 [retrieved on 2006-01-01]
- JIANG ET AL: "Rutin and flavonoid contents in three buckwheat species Fagopyrum esculentum, F. tataricum, and F. homotropicum and their protective effects against lipid peroxidation", FOOD RESEARCH INTERNATIONAL, ELSEVIER, AMSTERDAM, NL, vol. 40, no. 3, 23 January 2007 (2007-01-23), pages 356-364, XP005856104, ISSN: 0963-9969, DOI: 10.1016/J.FOODRES.2006.10.009

## Description

The invention relates to biologically active food additives and is suitable for a prophylactic action on the cerebral blood vessels, improvement of the quality of thinking, memory, human tolerance to physical and mental activity, and also enables prevention of strokes, improvement of the brain metabolism, acts as a stimulant for the central mechanisms regulating the intensity of androgens formation.

Known are therapeutic preparations for the prevention of strokes, in particular "Intellectualnye" biologically active (RU 2241479, 10.12.2004) consisting of pollen, royal jelly, dry concentrate of black chokeberry decoction, dry concentrate of Rhodiolae rosea extract, ginger root, succinic acid, nicotinic acid, zinc sulfate, oats, starch, calcium stearate, talc and sugar used at a certain ratio.

The drawback of this preparation is that it is contains multiple components and as a consequence causes allergic reactions in some users.

"Immunomodulator" is known (RU 2185S48, 27.07.2002) comprising royal jelly, dry rosehip extract, dry beetroot extract and adjuvants for increasing body resistance to various infectious diseases, improving metabolism, increasing elasticity of blood vessel, prevention of allergic reactions. The drawback of this preparation is that it acts on the body as a whole rather than particularly on cerebral blood vessels.

"Apilar" tablets are known (RU 2233666, 10.08.2004) which are based on drone brood and have an anabolic aktoprotective action. Its cerebration improvement effect is associated with the presence of biologically active substances in drone brood: carbohydrates, amino acids (glycine, methionine, glutamic acid), hormones.

The drawbacks of this preparation are in that it requires medical control and includes no components preventing sclerotic changes in the cerebral blood vessels.

The document "Federalny reestr bioligicheski aktivniykh dobavok k pische", SPB, 2005 (XP008164756) discloses biologically active food additive based on the use of leaves of Gingko Biloba and fruits of Rosa majalis as a composition for overall well-being and capillary circulation improvement.

DE 196 27 627 A1 shows a solvent extract of intact brood honeycomb, preferably from drone brood, for use in pharmaceutical compositions. The composition has among others a blood circulation effect.

It is an object of the invention to provide a preparation meeting the standards for biologically active food additives, wherein the above drawbacks have been overcome.

A biologically active food additive has to include a minimum amount of pharmacopeial ingredients with the most pronounced therapeutic properties with respect to the cerebral vasculature, improvement of the quality of thinking, memory, human tolerance to physical and mental activity, blood pressure and circulation lowering action, cholesterol lowering action, vascular brittleness lowering action, improvement of the brain metabolism, prevention of strokes with a minimum of contraindications and side effects.

In addition, a biologically active food additive has to ensure a maximum preservation of total biologically active substances upon ingestion, be easy to use and store and suitable for mass production.

A biologically active food additive is provided according to the invention for a prophylactic action on the cerebral blood vessels, improvement of the quality of thinking, memory, human tolerance to physical and mental activity, prevention of strokes, improvement of the brain metabolism, characterized in that it includes drone brood, dried and ground rose hips, red-stemmed buckwheat grass gathered during blooming period and excipients at the following ratio, weight %:
drone brood: 5 to 50
dried and ground rose hips: 5 to 50
red-stemmed buckwheat grass: 5 to 50
excipients: 0 to 70.

The biologically active food additive is available in powdered, tableted or encapsulated form and may also be available as an aqueous alcoholic extract and dosage forms prepared on the basis of such extract, namely, powder, tablet and capsule.

The technical effect achieved using the invention consists in providing a dosed preparation meeting the standards for biologically active food additives, composed of a minimum number of high performance ingredients with a maximum preservation of the total biologically active substances, improving brain metabolism, quality of thinking, human tolerance to physical and mental activity and also having rheological properties. The biologically active food additive is highly suitable for mass production. At the same time, the technological aspects of the additive production create no problems for its mass production and the consumer package enables sensory perception of the entire combination of biologically active substances and ease in use and storage. The choice of drone brood, rose hips and red-stemmed buckwheat grass gathered during blooming period as ingredients of the biologically active food additive arises from the following reasons.

Red-stemmed buckwheat grass. It is known that the main reason of atherosclerosis is the lipidosis and flavonoids act as natural antioxidants in regulating the processes of lipid peroxidation in the cells. Therefore, the plants containing flavonoids which have manifested protective properties in the treatment of atherosclerosis may be used as ethiopathogenetic agents. One of such plants is the red-stemmed buckwheat grass gathered during blooming period, whose flowers and leaves contain flavonoids with rutin, quercetin, cetrin, fagopyrin and organic acids. Rutin is also referred to as a brain vitamin. The content of rue is of 12.0 to 12.2% in the flowers, 8.0 to 8.4% in the leaves and 2.4-3.0% in the stems. The red-stemmed buckwheat grass gathered during blooming period has a maximum balanced content of biologically active components. The biologically active substances in total enable strengthening of vascular walls, lowering cholesterol content, vascular brittleness, prevention of atherosclerosis of cerebral blood vessels, correct metabolism, cerebral lymphotrophy, treatment and prevention of cerebral haemorrhage, retinal haemorrhage.

Rose hips are included for the following reason. Vitamins C and PP are known to have a positive effect on the human circulatory system. Ascorbic acid (vitamin C) is a potent antioxidant which neutralized the action of water soluble free radicals. A deficit of vitamin C first of all affects the endurance of vessels, therefore it is important for the prevention of cardiovascular diseases as a vasotonic agent. Besides, the presence of vitamin C considerably enhances the pharmacodynamics of flavonoids. Vitamin C is involved in regulating the oxidation-reduction process, carbohydrate metabolism, coagulability of blood, angenesis, formation of steroid hormones, normalization of capillary permeability, enhances antitoxic function of liver. Nicotinic acid (vitamin PP) has a hypolipidemic activity being a specific antipellagra agrent, stimulant for the central mechanisms regulating the intensity of androgens formation, dilates minute vessels, especially cerebral blood vessels. It causes reduction of the total cholesterol content, low-density lipoproteins and, particularly triglycerides. Nicotinic acid is used in medicine in case of vasospasms of extremities, kidneys, brain as well as facial nerve neuritis, atherosclerosis, infectious diseases.

However, additives and products obtained by synthesis or artificially and not contained in a natural organic complex result in body "slagging" since these are not fully processed.

In order to solve this problem, rose hips are included in the biologically active food additives (cinnamon rose, wild rose, Daurian rose, prickly rose, Rosa majalis, rugous rose and others) are included in the composition of the biologically active food additive. Rose hips contain vitamins A, C, E, PP, K, rutin, carotinoids, catechins, flavonoids, essential oils, trace elements such as potassium, calcium, iron, manganese, phosphorus, magnesium, acids such as linolenic, linoleic and other acids.

Drone brood is a source of a whole complex of biologically active substances: lipids, vitamins, amino acids, trace elements. Accordingly, it may be considered as a valuable food product with useful properties.

Although the components of the inventive biologically active food additive are known in the folk and traditional medicine, no combination thereof in a single product is known in the prior art.

It is important to consider the rheological properties of blood in the therapy of vascular diseases. Embolism leads to strokes. It has been found by the inventors that the combination of drone brood, rose hips and red-stemmed buckwheat taken in the proposed ratios results in hemodilution so that the inventive additive may used as a hemorheologic agent. At the same time, the inventive additive has a spasmolytic action on the cerebral vessels whereby blood pressure lowers, sclerotic changes in the cerebral vessels and vascular brittleness are prevented.

It is precisely by combining the components selected by the inventors in the proposed ratios that all the above properties are manifested to a singificant extent. Thus, it has been found that the combined use of the proposed components in the proposed ratios enhances the quality of thinking, memory, brain metabolism.

The above pharacodyamics is not observed when the components of the inventive additive are used separeatey.

Any known excipients suitable for tableting or encapsulation are used for preparing the biologically active food additive in the form of tablets of capsules.

For example, drone brood in the form of a lyophilizate is used for preparing the biologically active food additive. For preparing the lyophilizate, drone brood material is homogenized using a mixer. The homogenate comprises a thick creamy yellow liquid with a specific odor. The brood material content in the homogenate is not more than 22.5%. the lyophilizate is prepared by freezing the homogenate for 2-3 hours at a temperature of 35-40°C followed by vacuum sublimation at a residual pressure of 0.1 to 0.6 mm hg for 40-48 hours bringing the temperature to 25-30°C by the end of drying. The lyophilizate comprises a powder whose color may vary from beige to yellow, is highly hygroscopic and has the residual humidity of 1 to 3.5%. In other words, the conditions of preparing the lyophilizate allow the dry matter composition of drone brood homogenate to be preserved without changes except for the moisture content.

Examples of preparing the biologically active food additive:

### Example 1

Drone brood in the form of homogenate, ground wild rose hips and ground red-stemmed buckwheat grass gathered during blooming period were provided at a following ratio:
drone brood: 5 wt. %
rose hips: 45 wt. %
red-stemmed buckwheat grass gathered during blooming period: 50 wt.%.

All components were mixed together to homogeneity. The resulting product comprised a powder.

### Example 2

Drone brood in the form of homogenate, ground cinnamon rose hips, ground red-stemmed buckwheat grass gathered during blooming period and excipients (tableting components: calcium stearate, starch and sugar) were provided at a following ratio:
drone brood: 50 wt. %
rose hips: 5 wt. %
red-stemmed buckwheat grass gathered during blooming period: 5 wt. %
excipients: 40 wt. %.

All components were mixed together to homogeneity and the resulting product was then tableted.

### Example 3

Drone brood in the form of homogenate, ground wild rose hips, ground red-stemmed buckwheat grass gathered during blooming period and excipients were provided at a following ratio:
drone brood: 30 wt. %
rose hips: 50 wt. %
red-stemmed buckwheat grass gathered during blooming period: 15 wt.%.
excipients: 5 wt.%.

All components were mixed together to homogeneity. The resulting product was encapsulated.

## Claims

1. A biologically active food additive for use in the treatment of the human's hemorheology, resulting in a spasmolytic action on the cerebral blood vessels, improvement of the quality of thinking, memory, human tolerance to physical and mental activity, prevention of strokes, improvement of the brain metabolism **characterized in that** it includes drone brood, dried and ground rose hips, red-stemmed buckwheat grass gathered during the blooming period and excipients at the following ratio:
- drone brood: 5 to 50 wt.%,
- dried and ground rose hips: 5 to 50 wt.%,
- red-stemmed buckwheat grass gathered during the blooming period: 5 to 50 wt.%,
- excipients: 0 to 70 wt.%.

## Patentansprüche

1. Biologisch aktives Nahrungsergänzungsmittel zur Verwendung in der Behandlung menschlicher Hämorheologie, das sich spasmolytisch auf die zerebralen Blutgefäße auswirkt, zu einer Verbesserung der Denkqualität, des Gedächtnisses, der menschlichen Toleranz gegenüber körperlicher und geistiger Aktivität, Prävention von Schlaganfällen und der Verbesserung des Gehirnstoffwechsels führt, **dadurch gekennzeichnet, dass** es Drohnenbrut, getrocknete und gemahlene Hagebutten, rotstieliges während der Blütezeit geerntetes Buchweizengras und Arzneistoffträger in folgendem Verhältnis enthält:
- Drohnenbrut: 5 bis 50 Gewichts-%,
- Getrocknete und gemahlene Hagebutten: 5 bis 50 Gewichts-%,
- Rotstieliges Buchweizengras während der Blütezeit geerntet: 5 bis 50 Gewichts-%,
- Arzneistoffträger: 0 bis 70 Gewichts-%.

## Revendications

1. Additif alimentaire biologiquement actif pour une utilisation dans le traitement de l'hémorhéologie humaine, résultant en une action spasmolytique des vaisseaux sanguins cérébraux, en l'amélioration de la qualité de la pensée, de la mémoire, de la tolérance humaine à l'activité physique et mentale, en la prévention des accidents vasculaires cérébraux, en l'amélioration du métabolisme du cerveau **caractérisé en ce qu'**il inclut du couvain de faux-bourdon, des fruits séchés et broyés de cynorhodon, du sarrasin à tiges rouge cueillies en période de floraison et des excipients dans le rapport suivait :
- couvain de faux bourdon : de 5 à 50 % en poids,
- fruits séchés et broyés du cynorhodon: de 5 à 50 % en poids,
- sarrasin à tiges rouges cueilli en période de floraison : de 5 à 50 % en poids,
- excipients : de 0 à 70 % en poids.
